# FASCICULE DE BREVET EUROPEEN

(11) **EP 2 009 871 B1**
(45) Date de publication et mention de la délivrance du brevet: **11.08.2010**
(21) Numéro de dépôt: 08290555.5
(22) Date de dépôt: 13.06.2008
(51) Int. Cl.: H04L 29/06

(54) **Procédé de communication avec interception de messages de controle.**
Kommunikationsverfahren mit Abhören von Kontrollnachrichten.
Communication method with interception of control messages

(30) Priorité: 25.06.2007 FR 0704525
(43) Date de publication de la demande: 31.12.2008
(73) Titulaire: Alcatel Lucent, 75008 Paris (FR)
(72) Inventeur: Gonguet, Arnaud, 75008 Paris (FR); Verdot, Vincent, 75008 Paris (FR)

(56) Documents cités:
- WO-A-02/13023
- US-A1- 2004 057 436
- US-A1- 2006 256 721

## Description

L'invention a trait au domaine des télécommunications.

Les télécommunications tendent à évoluer vers le tout-IP, c'est-à-dire l'échange de l'ensemble des données multimédia selon le protocole Internet, couramment dénommé protocole IP (*Internet Protocol*). Suivant le protocole IP, les données numérisées, qu'il s'agisse de données multimédia (image, son, vidéo) ou voix (généralement pour les applications téléphoniques), sont constituées en paquets IP placés dans des trames et transmis sur le réseau, qu'il s'agisse d'un réseau local (LAN), métropolitain (MAN) ou étendu (WAN).

La communication entre deux entités communicantes reliées au réseau peut se faire suivant deux types de dialogue : le mode sans connexion (*connectionnless oriented*) et le mode avec connexion (*connection oriented*).

Dans le mode sans connexion, les paquets sont transmis par l'entité émettrice sans que celle-ci ait au préalable vérifié la présence sur le réseau de l'entité destinataire.

Dans le mode avec connexion, les entités exécutent, préalablement à la transmission des données proprement dite, une phase de négociation au cours de laquelle est établie la connexion. Après que la connexion a été établie, les données sont échangées. Puis, une fois l'échange de données terminé, la connexion est libérée. Au moment de l'ouverture de la connexion, les entités peuvent en outre négocier la qualité de service ou QoS (*Quality of Service*), pour laquelle des paramètres définissant les limites admissibles de la communication sont échangés entre les entités.

Une architecture réseau actuellement en plein essor offre un cadre adéquat pour les communications multimédia entre entités communicantes en mode avec connexion : il s'agit de l'IMS (*IP Multimedia Subsystem*), développée au sein du consortium 3GPP (*Third Generation Partnership Project*).

Pour l'établissement, la modification et la terminaison des sessions de communication, ainsi que l'authentification, l'IMS a recours au protocole SIP (*Session Initiation Protocol*).

Au niveau session de la pile de protocole des datagrammes échangés entre deux entités du réseau, le protocole de communication le plus couramment utilisé aujourd'hui est le protocole RTP (*Realtime Transport Protocol*), employé en combinaison avec le protocole UDP (*User Datagram Protocol*) utilisé quant à lui au niveau message de la pile.

À ces deux protocoles sont associés des protocoles de contrôle, employés lorsque le réseau rencontre des problèmes affectant la communication entre les entités : problèmes de routage, de déconnexion d'une ou plusieurs entités, ou encore de panne réseau.

Au niveau session, le protocole de contrôle associé au protocole RTP est le protocole RTCP (*Realtime Transport Control Protocol*) dont une fonction essentielle est d'informer les entités communicantes sur la qualité de service. Au niveau message, le protocole de contrôle couramment employé, associé au protocole UDP, est le protocole ICMP (*Internet Control Message Protocol*).

En pratique, la communication entre deux entités en mode avec connexion implique :
- l'ouverture d'une application (au niveau logiciel) destinée à assurer la lecture des données (sur écran et/ou haut-parleur) contenues dans les paquets. Cette application peut être, soit l'entité elle-même, lorsque ce terme est utilisé dans une acception logicielle, soit une application logicielle implémentée sur une unité de traitement (processeur) de l'entité lorsque ce terme est utilisé dans une acception matérielle pour désigner un appareil communiquant (SoftPhone, PDA communicant, etc.) ;
- l'ouverture d'une connexion au niveau d'une interface de communication intégrée (dans une acception matérielle) ou associée (dans une acception logicielle) à l'entité.

Selon un mode de fonctionnement classique, lorsque le réseau ou une entité rencontre des problèmes (panne ou interruption du réseau, handover - c'est-à-dire le changement de cellule dans les réseaux de mobile - mal géré, etc.), les paquets de données échangés peuvent être soit incomplets, soit manquants. La détection de cette défaillance génère en certains noeuds du réseau des messages de contrôle adressés à l'entité destinataire et destinés à l'informer de la dégradation de la qualité de service. Comme la qualité de service est considérée prioritaire dans les politiques réseaux actuelles, la prise en compte de ces messages de contrôle par l'application induit en général sa fermeture immédiate ou différée, avec pour corollaire la nécessité, lorsque la connexion est rétablie ou réparée, de relancer l'application en passant par toutes les étapes préalables à la lecture des données : authentification, etc.

Il en résulte une perte de temps - et de données - pour l'utilisateur.

Le document US 2004/057436 présente une méthode permettant de dupliquer des données de qualité de service interceptées ensuite retransmises à leur entité destinataire.

L'invention vise à perfectionner les réseaux existants en remédiant notamment aux problèmes précités.

A cet effet, l'invention propose, en premier lieu, un procédé de communication en mode avec connexion entre au moins deux entités communicantes, à savoir une entité émettrice et une entité destinataire, reliées par l'intermédiaire d'un réseau de télécommunication, ce procédé comprenant les opérations suivantes :
- envoi par l'entité émettrice d'un flot de données, sous forme de paquets, à destination de l'entité destinataire ;
- réception des données par un serveur d'applications mandataire interposé entre les entités,
- interception par le serveur mandataire de tout message de contrôle concernant la qualité de service, défini comme étant susceptible d'affecter le fonctionnement de l'entité destinataire,
- transmission par le serveur mandataire à l'entité destinataire du flot de données en provenance de l'entité émettrice, indépendamment de la qualité de service et sans transmission des messages de contrôle interceptés

Suivant un mode particulier de réalisation, le serveur mandataire intercepte tout message de contrôle concernant la qualité de service.

En variante, le serveur mandataire intercepte une catégorie prédéterminée de messages de contrôle, définis comme étant susceptibles d'affecter le fonctionnement de l'entité destinataire.

Des messages de contrôle peuvent être établis conformément aux protocoles RTCP ou ICMP.

En deuxième lieu, l'invention propose un système de communication fonctionnant en mode avec connexion, comprenant un serveur d'applications mandataire configuré pour :
- recevoir un flot de données en provenance d'une entité communicante émettrice, à destination d'une entité communicante destinataire reliée à l'entité émettrice par l'intermédiaire d'un réseau de télécommunications,
- intercepter tout message de contrôle concernant la qualité de service, défini comme étant susceptible d'affecter le fonctionnement de l'entité destinataire,
- transmettre le flot de données à l'entité destinataire indépendamment de la qualité de service, sans transmettre les messages de contrôle interceptés.

En troisième lieu, l'invention propose un produit programme d'ordinateur implémenté sur une unité de traitement et comprenant des instructions pour :
- recevoir en mode avec connexion un flot de données en provenance d'une entité communicante émettrice, à destination d'une entité communicante destinataire reliée à l'entité émettrice par l'intermédiaire d'un réseau de télécommunications,
- intercepter tout message de contrôle concernant la qualité de service, susceptible d'affecter le fonctionnement de l'entité destinataire,
- transmettre le flot de données à l'entité destinataire indépendamment de la qualité de service, sans transmettre les messages de contrôle interceptés.

D'autres objets et avantages de l'invention apparaîtront à la lumière de la description faite ci-après en référence aux dessins annexés dans lesquels :
- la figure 1 est une vue schématique montrant une architecture réseau permettant la mise en oeuvre d'un procédé de communication selon l'invention ;

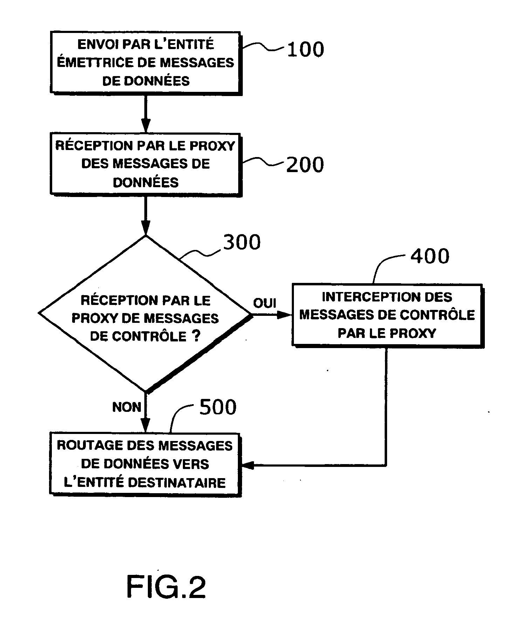

- la figure 2 est un diagramme montrant différentes étapes d'un procédé de communication selon à l'invention ;

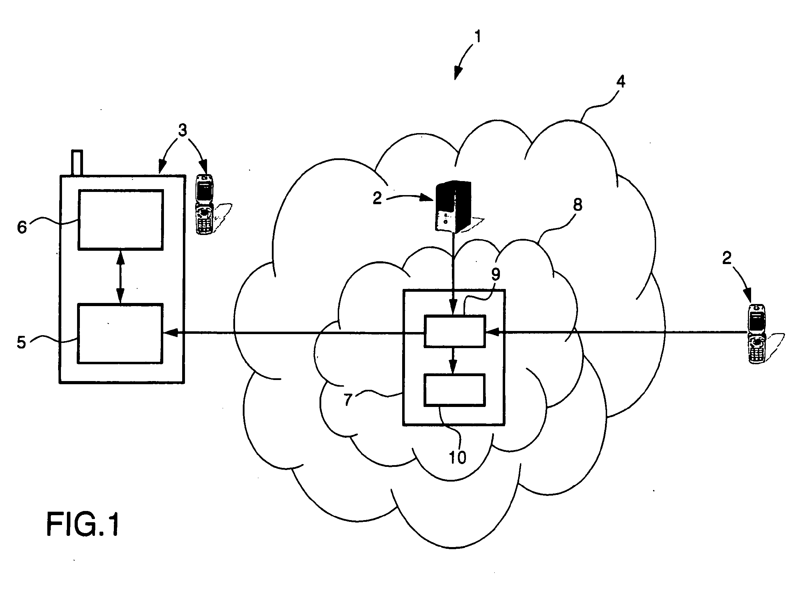

Sur la figure 1 est représentée une architecture réseau 1 comprenant au moins deux entités communicantes 2, 3 sous forme Smartphone), reliés par l'intermédiaire d'un réseau **4** local (LAN), métropolitain (MAN) ou étendu (WAN) tel qu'Internet.

Chaque entité **2, 3** comprend une interface **5** de communication propre à établir une connexion avec le réseau **4** et prendre en charge des communications échangées suivant le protocole IP, et une application **6** logicielle susceptible de lire les données contenues sous forme de paquets dans les messages échangés via le réseau **4.**

L'interface 5 de communication et l'application **6** sont configurées dans chaque entité **2, 3** pour prendre en charge des protocoles d'échange de données en mode avec connexion, notamment RTP.

Lors d'une communication établie entre deux entités **2, 3** (on pourrait bien entendu prévoir une communication entre un nombre d'entités supérieur à deux), une entité **2** émettrice envoie un flot de données sous forme de paquets à une entité **3** destinataire.

L'entité **3** destinataire est reliée à un serveur mandataire **7** ou proxy, intégré à un réseau coeur **8 -** notamment de type IMS - implémenté au sein du réseau **4,** et par lequel transitent les messages transmis à l'entité **3** destinataire.

Le serveur **7** mandataire inclut deux modules fonctionnels, à savoir :
- un module **9** de filtrage, propre à détecter, dans le flux de données transitant par le serveur **7,** des messages de contrôle de type ICMP (au niveau message) ou RTCP (au niveau session) comportant des informations relatives à la qualité de service ;
- un module **10** de capture vers lequel sont routés les éventuels messages de contrôle.

De tels messages de contrôle sont inclus dans le flux de données transitant sur le réseau **4** à destination de l'entité 3 destinataire, dès que des problèmes sont détectés au sein du réseau 4 (par exemple au niveau d'une passerelle), affectant soit la connexion elle-même (panne ou indisponibilité du réseau), soit la qualité des données transmises (par exemple perte de paquets). Il est à noter que la notion de qualité de service (QoS) vise à qualifier ce type de problème.

L'architecture **1** décrite ci-dessus permet d'organiser une communication entre au moins deux entités **2, 3,** à savoir une entité **2** émettrice et une entité **3** destinataire, de la manière suivante.

Une première opération **100** consiste, pour l'entité **2** émettrice, à envoyer un flot de données (images, son, vidéo, voix), sous forme de paquets inclus dans une trame IP, à destination de l'entité **3** destinataire.

Une deuxième opération **200** consiste, pour le serveur **7** mandataire, à réceptionner les données envoyées par l'entité **2** émettrice.

Une troisième opération **300** consiste pour le serveur **7** mandataire à examiner les données par le module **9** de filtrage aux niveaux message et session des trames pour y détecter respectivement des messages de contrôle de type ICMP ou RTCP, relatifs à la qualité de service.

Une quatrième opération 400 consiste pour le serveur **7** mandataire, et plus précisément pour le module **9** de filtrage, dès lors que des messages de contrôle sont détectés par celui-ci, à intercepter ces messages et à les router vers le module **10** de capture où ils sont stockés - ou détruits - sans être transmis à l'entité **3** destinataire lorsque ces messages sont définis comme susceptibles d'en affecter le fonctionnement.

Il est possible de paramétrer le module **9** de filtrage pour :
- soit intercepter tout message de contrôle, si l'on considère que tout message de ce type est susceptible d'affecter le fonctionnement de l'application **6** (et donc de l'entité **3** destinataire), c'est-à-dire de provoquer sa fermeture ou tout du moins un dysfonctionnement au sein de celle-ci,
- soit intercepter uniquement une catégorie prédéterminée de messages de contrôle, définis comme susceptible d'affecter le fonctionnement de l'application **6** (et donc de l'entité **3** destinataire), les autres messages de contrôle, définis comme inoffensifs vis-à-vis de l'application, étant transmis.
   En pratique, un tel paramétrage est effectué par un administrateur réseau.
   Quant au flot de données envoyées par l'entité **2** émettrice, une cinquième étape **500** consiste pour le serveur **7** mandataire, et plus précisément pour son module **9** de filtrage, à les transmettre quoi qu'il en soit à l'entité **3** destinataire, indépendamment de la qualité de service - c'est-à-dire, du point de vue des données, que les paquets transmis soit complets ou non, et, du point de vue du serveur **7** mandataire, que des messages de contrôle aient été interceptés ou non.
   En pratique, les flux RTP et RTCP étant généralement traités par des ports différents, le flux de données (en mode RTP) ne transitent pas nécessairement par le module **9** de filtrage, lequel est préférentiellement relié uniquement au port RTCP.
   Ainsi, l'application **6** est maintenue ouverte quelle que soit la qualité du service, et en particulier quel que soit l'état du réseau **4** ou de la connexion. En particulier, en cas d'interruption du réseau **4** (ce cas est courant dans les réseaux de mobiles lorsqu'un mobile perd le réseau, par exemple en raison d'un obstacle interposé sur l'interface air, tel qu'un tunnel), il n'est pas nécessaire de relancer l'application **6** - en passant par des phases préliminaires comprenant par exemple une étape d'authentification - lorsque le réseau **4** est rétabli. Si une telle fonctionnalité va à l'encontre de la tendance actuelle privilégiant avant tout la qualité de service, elle permet aux utilisateurs de réaliser de précieux gains de temps.

Nous avons vu que le terme « entité » peut recouvrir non seulement tout appareil communiquant, comme décrit ci-dessus, mais également toute application logicielle susceptible de recevoir des données en provenance du réseau. Il est par ailleurs à noter que, comme cela est illustré sur la figure 1, l'entité **2** émettrice peut être un serveur, par exemple un serveur média.

Le fait que le serveur **7** mandataire soit, dans la description qui précède, intégré à un coeur de réseau IMS est un exemple particulier non limitatif. Un tel serveur **7** pourrait être intégré à un autre type de réseau, notamment au sein du réseau local d'un opérateur d'accès à Internet et fournissant par exemple des services de vidéo diffusée en mode streaming, c'est-à-dire en direct ou en léger différé (par opposition au téléchargement).

## Revendications

1. Procédé de communication en mode avec connexion entre au moins deux entités **(2, 3)** communicantes, à savoir une entité **(2)** émettrice et une entité **(3)** destinataire, reliées par l'intermédiaire d'un réseau **(4)** de télécommunication, ce procédé comprenant les opérations suivantes :
- envoi par l'entité **(2)** émettrice d'un flot de données, sous forme de paquets, à destination de l'entité **(3)** destinataire ;
- réception des données par un serveur (**7**) d'applications mandataire interposé entre les entités **(2, 3),**
- interception par le serveur **(7)** mandataire de tout message de contrôle concernant la qualité de service, défini comme étant susceptible d'affecter le fonctionnement de l'entité **(3)** destinataire,
- transmission par le serveur (**7**) mandataire à l'entité **(3)** destinataire du flot de données en provenance de l'entité **(2)** émettrice, indépendamment de la qualité de service et sans transmission des messages de contrôle interceptés

2. Procédé selon la revendication 1, dans lequel le serveur (7) mandataire intercepte tout message de contrôle concernant la qualité de service.

3. Procédé selon la revendication 1, dans lequel le serveur (7) mandataire intercepte une catégorie prédéterminée de messages de contrôle, définis comme étant susceptibles d'affecter le fonctionnement de l'entité (3) destinataire.

4. Procédé selon l'une des revendications 1 à 2, dans lequel des messages de contrôle sont établis conformément au protocole RTCP.

5. Procédé selon l'une des revendications 1 à 3, dans lequel des messages de contrôle sont établis conformément au protocole ICMP.

6. Système de communication fonctionnant en mode avec connexion, comprenant un serveur **(7)** d'applications mandataire configuré pour :
- recevoir un flot de données en provenance d'une entité **(2)** communicante émettrice, à destination d'une entité **(3)** communicante destinataire reliée à l'entité **(2)** émettrice par l'intermédiaire d'un réseau **(4)** de télécommunications,
- intercepter tout message de contrôle concernant la qualité de service, défini comme étant susceptible d'affecter le fonctionnement de l'entité **(3)** destinataire,
- transmettre le flot de données à l'entité **(3)** destinataire indépendamment de la qualité de service, sans transmettre les messages de contrôle interceptés

7. Produit programme d'ordinateur implémenté sur une unité de traitement et comprenant des instructions pour :
- recevoir en mode avec connexion un flot de données en provenance d'une entité **(2)** communicante émettrice, à destination d'une entité **(3)** communicante destinataire reliée à l'entité **(2)** émettrice par l'intermédiaire d'un réseau **(4)** de télécommunications,
- intercepter tout message de contrôle concernant la qualité de service, susceptible d'affecter le fonctionnement de l'entité **(3)** destinataire,
- transmettre le flot de données à l'entité **(3)** destinataire indépendamment de la qualité de service, sans transmettre les messages de contrôle interceptés.

## Claims

1. A communication method for a mode with connection between at least two communicating entities (2, 3), specifically a sending entity (2) and a receiving entity (3), connected by means of a telecommunication network (4), which method comprises the following operations:
- the sending entity (2) sending a batch of data, in the form of packets, to the receiving entity (3);
- the data being received by a proxy application server (7) placed between the entities (2, 3),
- the proxy server (7) intercepting any control message regarding quality of service, defined as one potentially affecting the operation of the receiving entity (3),
- the proxy server (7) transmitting to the receiving entity (3) the batch of data coming from the sending entity (2), independently of the quality of service and without transmitting the intercepted control messages.

2. A method according to claim 1, wherein the proxy server (7) intercepts any control message regarding quality of service.

3. A method according to claim 1, wherein the proxy server (7) intercepts a predetermined category of control messages, defined as those potentially affecting the operation of the receiving entity (3).

4. A method according to one of the claims 1 to 2, wherein the control messages are created in accordance with the RTCP protocol.

5. A method according to one of the claims 1 to 3, wherein the control messages are created in accordance with the ICMP protocol.

6. A communication system operating in a mode with a connection, comprising a proxy application server (7) configured to:
- receive a batch of data from a sending communicating entity (2), intended for a receiving communicating entity (3) connected to the sending entity (2) by means of a telecommunications network (4),
- intercepting any control message regarding quality of service, defined as one potentially affecting the operation of the receiving entity (3),
- transmitting the batch of data to the receiving entity (3) independently of the quality of service, without transmitting the intercepted control messages.

7. A computer program product implemented on a processing unit and comprising instructions for:
- receiving, in a connection mode, a batch of data from a sending communicating entity (2), intended for a receiving communicating entity (3) connected to the sending entity (2) by means of a telecommunications network (4),
- intercepting any control message regarding quality of service, which may affect the operation of the receiving entity (3),
- transmitting the batch of data to the receiving entity (3) independently of the quality of service, without transmitting the intercepted control messages.

## Patentansprüche

1. Verfahren zur verbindungsorientierten Kommunikation zwischen mindestens zwei Kommunikationseinheiten (2, 3), und zwar einer Sendeeinheit (2) und einer Empfangseinheit (3), welche über ein Telekommunikationsnetzwerk (4) miteinander verbunden sind, wobei dieses Verfahren die folgenden Schritte umfasst:
- Senden, durch die Sendeeinheit (2), eines Datenstroms in der Form von Paketen an die Empfangseinheit (3);
- Empfangen der Daten an einem zwischen den Einheiten (2, 3) angeordneten Proxy-Anwendungsserver (7),
- Abfangen, durch den Proxy-Server (7), aller Steuernachrichten, welche die Dienstgüte betreffen und als eventuell die Betriebsfähigkeit der Empfangseinheit (3) beeinträchtigend definiert sind,
- Weiterleiten, durch den Proxy-Server (7), des von der Sendeinheit (2) ausgegebenen Datenstroms an die Empfangseinheit (3), unabhängig von der Dienstgüte und ohne Übertragen der abgefangenen Steuernachrichten.

2. Verfahren nach Anspruch 1, wobei der Proxy-Server (7) alle die Dienstgüte betreffenden Steuernachrichten abfängt.

3. Verfahren nach Anspruch 1, wobei der Proxy-Server (7) eine vorbestimmte Kategorie von Steuernachrichten, welche als eventuell die Betriebsfähigkeit der Empfangseinheit (3) beeinträchtigend definiert sind, abfängt.

4. Verfahren nach einem der Ansprüche 1 bis 2, wobei die Steuernachrichten gemäß dem RTCP-Protokoll erstellt werden.

5. Verfahren nach einem der Ansprüche 1 bis 3, wobei die Steuernachrichten gemäß dem ICMP-Protokoll erstellt werden.

6. System zur verbindungsorientierten Kommunikation, umfassend einen Proxy-Anwendungsserver (7), welcher für die folgenden Schritte konfiguriert ist:
- Empfangen eines von einer Sende-Kommunikationseinheit (2) ausgegebenen und an eine über ein Telekommunikationsnetzwerk (4) mit der Sendeeinheit (2) verbundene Empfangs-Kommunikationseinheit (3) gerichteten Datenstroms,
- Abfangen aller Steuernachrichten, welche die Dienstgüte betreffen und als eventuell die Betriebsfähigkeit der Empfangseinheit (3) beeinträchtigend definiert sind,
- Weiterleiten des Datenstroms an die Empfangseinheit (3), unabhängig von der Dienstgüte und ohne Übertragen der abgefangenen Steuernachrichten.

7. Computerprogramm-Produkt, welches auf einer Verarbeitungseinheit implementiert wird und Befehle für die folgenden Schritte umfasst:
- Empfangen, im verbindungsorientierten Modus, eines von einer Sende-Kommunikationseinheit (2) ausgegebenen und an eine über ein Telekommunikationsnetzwerk (4) mit der Sendeeinheit (2) verbundene Empfangs-Kommunikationseinheit (3) gerichteten Datenstroms,
- Abfangen aller Steuernachrichten, welche die Dienstgüte betreffen und eventuell die Betriebsfähigkeit der Empfangseinheit (3) beeinträchtigen können,
- Weiterleiten des Datenstroms an die Empfangseinheit (3), unabhängig von der Dienstgüte und ohne Übertragen der abgefangenen Steuernachrichten.
